Europäisches Patentamt

European Patent Office

Office européen des brevets

(11) Publication number: **0 362 772**
**A2**

## (12) EUROPEAN PATENT APPLICATION

(21) Application number: **89118249.5**

(22) Date of filing: **02.10.89**

(51) Int. Cl.⁵: **C08G 59/50 , C08L 63/00 , C09J 163/00**

Claim for the following Contracting State: ES

(30) Priority: **05.10.88 US 254343**

(43) Date of publication of application:
**11.04.90 Bulletin 90/15**

(84) Designated Contracting States:
**DE ES FR GB IT SE**

(71) Applicant: **National Starch and Chemical Corporation**
**Finderne Avenue P.O. Box 6500**
**Bridgewater, N.J. 08807 (New Jersey)(US)**

(72) Inventor: **Wallach, Robert S.**
**312 South Washington Avenue**
**Dunellen New Jersey 08812(US)**

(74) Representative: **Hagemann, Heinrich, Dr. et al**
**Patentanwälte Hagemann & Kehl Postfach**
**860329**
**D-8000 München 86(DE)**

(54) **Self-fixturing structural adhesives.**

(57) This invention presents a self-fixturing structural adhesive which is capable of forming a bond of sufficient strength to be utilized in structural applications. The adhesive comprises a thermoplastic epoxy produced by the reaction of an epoxy with a reactive elastomer, and an epoxy curing agent which is reactive at ambient temperature. Such adhesives will form a green bond when applied and will cure at ambient temperature, nominally 25°C, to form a structural strength bond.

EP 0 362 772 A2

## SELF-FIXTURING STRUCTURAL ADHESIVES

BACKGROUND OF THE INVENTION

This invention relates to thermoplastic adhesive compositions which are capable of forming an initial or green holding bond, and subsequently crosslink and cure at ambient temperature to form a structural strength bond.

The concept of thermosetting or crosslinking resin adhesives is known in the art. Many resin adhesives which undergo an irreversible chemical and physical change and become substantially insoluble are well known. Thermosetting adhesives comprising both condensation polymers and addition polymers are also known and examples include the urea-formaldehyde, phenol-formaldehyde melamine-formaldehyde, and epoxy resins; unsaturated polyester; and polyurethane adhesives. More particularly, U.S. Pat. No. 3,723,568 teaches the use of polyepoxides and optional epoxy polymerization catalysts as adhesive compositions. U.S. Pat. No. 4,122,073 teaches thermosetting resins obtained from polyisocyanates, polyanhydrides and polyepoxides. In both of these patents, crosslinking is achieved by reaction with available sites in the base polymers.

U.S. Pat. No. 4,137,364 teaches crosslinking of an ethylene/vinyl acetate/vinyl alcohol terpolymer using isophthaloyl biscaprolactam or vinyl triethoxy silane wherein additional crosslinking is induced by heat after application of the adhesive. U.S. Pat. No. 4,116,937 teaches a further method of thermal crosslinking by the use of polyamino bismaleimide class of flexible polyimides, which compounds can be hot melt extruded up to 150°C, and undergo crosslinking at elevated temperatures thereabove. In these latter two patents, the crosslinking is also achieved by reactions of the particular crosslinking agent with available sites of the base polymers.

Such resin adhesives, upon curing, form a strong bond suitable for use in structural applications, yet they suffer from the drawback of not being able to form an initial bond quickly. Generally, the surfaces to be bonded must be clamped or otherwise held together during the cure to assure a good bond.

Hot melt and thermoplastic adhesives, on the other hand, are capable of forming an initial, or green, bond rapidly. Such adhesives may be thermoplastic, i e., able to reversibly liquefy (and form a bond of low strength) at high temperatures and congeal (forming a higher strength bond) at lower temperatures or thermosetting, irreversibly curing when heated to the curing temperature to form a bond. Examples of these types of adhesives are described in U.S. Pat. No. 4,352,858. Such adhesives are useful in laminating processes; however, generally both types of adhesives cannot form bonds of sufficient strength to have utility in structural systems. This is especially true of thermoplastic hot melts which, because they reversibly liquefy upon heating, lack heat resistance. Often, the bonds formed by these adhesives become very weak at temperatures as low as 150°F (68°C) and, thus, their utility is limited to systems which will not be subjected to even small amounts of heat.

To be usable in structural applications, an adhesive must be capable of forming a high strength bond at ambient temperature and, also, of maintaining this bond at elevated temperatures. Normally, an ambient temperature bond shear tensile strength of at least 200 psi is needed. These types of bonds are generally formed by the crosslinking resins described supra, particularly the epoxy resins. Yet, such systems lack the characteristics of being easily applied as well as being incapable of forming an initial bond.

To remedy this, researchers have attempted to modify the adhesive systems. For example, U.S. Pat. No. 4,500,703 discloses a solid epoxy dispersion which is applied as a powder and subsequently heated above its melting point to cure. Such a system can be applied easily to the surfaces to be bonded and subsequently cured. However, the adhesive will not form an initial or green holding bond.

U.S. Pat. No. 4,560,579 discloses an epoxy composition which contains a mixture of an epoxy resin, a thermal initiator, and a thermoplastic material. Such a system, according to the patent, can be applied to the surfaces to be bonded as a liquid and will form an initial weak bond; the entire composite is then immediately cured, either by heating in an oven or by electrical inductive heating, at a temperature sufficiently high to cause the initiator to stimulate crosslinking curing. The utility of such a system is, however, limited to applications where the bonded substances are amenable to such heating and, further, where the curing can be instituted immediately after the initial bond forms. This is inconvenient, however, in many applications, such as in the automotive industry, where bonded substrates are often manufactured at locations other than the final assembly point.

In such applications, the heat curing is an additional step which, if eliminated, would make the process more convenient and economical. Thus, there exists a real need for an adhesive having substantial green strength which is capable of curing at room temperature.

Accordingly, it is an object of this invention to provide structural bonding adhesives which are easily applied to the surfaces to be bonded, which are capable of forming an initial or green holding bond, and which will cure to a structural strength bond at room temperature. It is further an object of this invention to present structural bonding adhesives which maintain high bond strengths at elevated temperatures.

## SUMMARY OF INVENTION

The above and related objects are achieved in a series of self-fixturing adhesives comprising an epoxy resin, an elastomer, and a curing agent possessing one or more amine, amide, or imidazole functionalities. Such adhesives form initial or green holding bonds having a tensile lap - shear strength of at least 2 psi, preferably at least 20 psi, and cured bonds having tensile - lap shear strengths of at least 300 psi, preferably 300 - 3000 psi or greater at room temperature (nominally 25° C, 65°F) and at least 50 psi, preferably 50 - 800 psi at 200° F (93° C).

Such adhesives can be easily applied to the surfaces to be bonded, and rapidly form an initial or green holding bond. The cure takes place during a subsequent incubation at ambient temperature and the resultant bonded article can be heated without disrupting the bond. As used herein, the term "ambient temperature" shall mean a nominal temperature of 25°C.

## DETAILED DESCRIPTION OF THE INVENTION

Two classes of epoxy resins known in the art can be used in the adhesives herein: the diglycidyl ethers of bis phenol A (DGEBPA) and epoxy cured novolacs (ECN). Both classes are widely available under a variety of tradenames from many manufacturers. For example, suitable DGEBPA resins include Dow Epoxy 661 and Shell EPON 834; suitable ECN resins include ECN 1235 marketed by Ciba-Geigy. This list is not intended to be exhaustive, however, and in general, any DGEBPA or ECN resin can be utilized so long as it is compatible with the elastomer and initiator used.

Such resins must be in a solid form to be useful in the invention, since only solid resins will be capable of forming a green or initial bond when applied. Accordingly, the resins must have a molecular weight in the range of 450 - 1500, preferably 460 - 1400, more preferably 500 - 1200. Resins having a molecular weight below 400 are liquids, and, thus, will be incapable of forming a green bond of sufficient strength to be useful in this invention, while those having a molecular weight above 1500 will form cured bonds which are too brittle for use in structural applications.

The elastomers which are useful in the adhesives of this invention must possess functional groups capable of reacting with the epoxy resin, must be compatible with the other adhesive component(s) and, further, must impart a desirable degree of thermoplasticity to the adhesive. The suitable classes of elastomers include, carboxyl nitrile rubbers (such as Hycar 1300x8, Hycar 1300x9, and Hycar 1300x13 marketed by B. F. Goodrich), thioether rubbers (such as Permapol 795 and Permapol 875 marketed by P.R.C. Co.), and urethanes containing isocyanate substituents (such as Vibrathane B8020, Vibrathane B843, Vibrathane B888, and Vibrathane B620 marketed by Uniroyal and NSC 70-7141 marketed by National Starch and Chemical). Such materials also impart flexibility to the brittle bond that ordinarily forms when epoxy resins cure.

These two components are reacted at a temperature above the melting or softening point of the elastomer (nominally 125°C) for several hours (preferably 4 hours). During this reaction, the epoxy resin reacts with the carboxyl, thiol, or isocyanate substituents in the elastomer to form a thermoplastic epoxy composition. This composition behaves as a hot melt, becoming a liquid when heated above its melting point, but reversibly solidifying when cooled to ambient temperature. However, because it contains epoxy it will, upon the addition of the catalyst, at ambient temperature, crosslink to form a structural strength bond.

In standard practice, these two components are reacted in advance of use, since the reaction product will remain stable to prolonged storage. However, the reaction can be performed at any convenient time in a bonding process, so long as it is accomplished before the initiator is added. To achieve the desired thermoplastic properties in the reaction product and, thus, in the ultimate adhesive composition, the elastomer must constitute a large proportion of the composition. Generally, the elastomer comprises about 40 - 90% (by weight), preferably about 50 - 80% (by weight) while the epoxy resins comprises 10 - 60% (by weight), preferably about 20 - 50% (by weight). Use of significantly less elastomer will result in a loss of thermoplasticity, while significantly more elastomer will result in a loss of the epoxy properties, and, thus, a lower cured bond strength.

This reaction product is subsequently admixed with about 5 -20% (by weight), of an epoxy cure initiator containing amine, amide, or imidazole functionalities. These compounds are reactive with the epoxy at room temperature, and will cause the cure to initiate upon mixing; thus, this material should not be added until just prior to the use of the adhesive. Initiators suitable for use in the adhesives of this invention include polyamides; primary, secondary, and tertiary aliphatic and aromatic amines; amidoamines; imidazole derivatives, and mannich bases, but basically any compatible known epoxy curing agent bearing appropriate functionalities can be used.

In addition to these three ingredients, the adhesive may also contain one or more fillers or reinforcing agents as the application dictates. Virtually any material can be added so long as it does not react with any of the other adhesive components. Preferred reinforcing agents include talc, carbon black, silica, limestone, and metal powder.

The mixing of the initiator can be accomplished in batch or continuous fashion. In a preferred embodiment, the epoxy/elastomer reaction product and the initiator are continuously fed into a mixing chamber through metered valves; the mixture is then immediately applied to the surface to be bonded.

Regardless of the means of mixing, the adhesive is applied as a liquid directly to the surfaces to be bonded. Since the adhesive is mixed and applied at a temperature at which it remains liquid, there is no need for the use of solvents. Further, while the adhesive can be applied to both surfaces to be bonded, it is ordinarily applied to only one since the bond formed by the single layer is sufficiently strong for most structural applications. Once applied, the adhesive flows across the surface to form an even coat, filling any gaps and imperfections. The other surface is then brought into contact with the coated surface and, immediately, an initial or green bond is formed therebetween. The joined surfaces are then left at room temperature to permit the epoxy to cure, generally cure is achieved within 24 hours.

The bond, thus formed, is characterized by an ambient temperature tensile shear strength of at least 300 psi and a tensile shear strenght at 200° F of at least 50 psi. Such properties render the bonded composites suitable in a variety of applications, particularly in the automotive industry where metal structural parts are bonded at one site and subsequently shipped to another for painting and baking.

A further benefit of the bonds formed is that they remain flexible due to the thermoplastic components in the adhesive. Unlike epoxy bonds, which are quite brittle, the cured adhesive remains partially flexible while still having a tensile shear strength suitable for structural bonding applications. This is of particular advantage in automotive applications, as the flexible bond confers both shock absorbing and sound dampening properties to the system.

A wide variety of materials can be bonded by the adhesives of this invention, the only criterion being compatability with the adhesive system. However, because of the strength of the bond, the adhesives are particularly suited for bonding metal, including cold-rolled steel, killed steel, hot-dip galvanized steel, electro-galvanized steel, galvaneal, and aluminum alloys.

EXAMPLES

The following examples present certain preferred embodiments of the instant invention, but are not intended to be illustrative of all embodiments.

Example 1 - Tensile Shear Strength

To assess the green bond strength and cured bond strengths of the adhesives of this invention, a series of twelve three primary component adhesive compositions, as shown in Table I, were prepared by reacting the epoxy resin and elastomer at 125°C for 4 hours and, just prior to use, adding the initiator. Specifically, the resin and elastomer, were mixed and then heated to 125°C, to form a liquid mixture; the initiator was then added under constant agitation and the resulant adhesive was then applied to three separate cold rolled steel panels. An identical uncoated panel of steel was then brought into contact with the adhesive-coated panel to form a bond.

Each bonded panel composite was then examined for tensile shear strength following ASTM procedure D-1002, wherein the composites are subjected to linear shear forces parallel to the panel surfaces; the force at which the bond fails is recorded. Three determinations were made, the first (which assessed green bond strength) was made immediately after the two panels were brought into contact with each other. The other two determinations were made after the composites were incubated at room temperature for 24 hours, to permit curing, and were conducted on the composites at ambient temperature (nominally 25°C) and on

4

panels heated to 200°F (93°C). The results are presented in Table I.

TABLE I

| Adhesive Compositions Produced | | | |
|---|---|---|---|
| Sample No. | Composition (parts by weight) | | |
| | Epoxy Resin | Elastomer | Initiator |
| 1 | 40 Dow DER 661[1] Mol. Wt. = 1000 | 60 Hycar 1300x13[2] | 10 Ancamine[3] 500 |
| 2 | 60 Dow DER 661 Mol. Wt. = 1000 | 40 Hycar 1300x13 | 20 Versamide 140[4] |
| 3 | 30 Dow DER 661 Mol. Wt. = 1000 | 70 Permapol P795[5] | 10 Ancamine 503 |
| 4 | 60 Shell Epon 828[1] Mol. Wt. = 360 | 40 Hycar 1300x13 | 20 Ancamine 500 |
| 5 | 20 Dow DER 661 Mol. Wt. = 1000 | 80 Hycar 1300x13 | 5 Versamide 140 |
| 6 | 70 Shell Epon 1001[1] Mol. Wt. = 800 | 30 Vibrathane[6] B 8020 | 15 Ancamine 500 |
| 7 | 50 Ciba Geigy ECN-1235[7] Mol. Wt. = 500 | 50 Permapol P795 | 10 Ancamine 503 |
| 8 | 50 Shell Epon 834[1] Mol. Wt. = 450 | 50 Permapol P795 | 10 Versamide 140 |
| 9 | 80 Shell Epon 828 Mol. Wt. = 366 | 20 Vibrathane B8020 | 5 Tetraethylene Tetramine[8] |
| 10 | 50 Dow DER 661 Mol. Wt. = 1000 | 50 Permapol P795 | 10 Ancamine 500 |
| 11 | 60 Shell Epon 1002[1] Mol. Wt. = 1400 | 40 Hycar 1300x13 | Versamide 140 |
| 12 | 60 Dow DER 661 Mol. Wt. = 1000 | 40 Vibrathane B888 | 10 Ancamine 500 |
| Notes | | | |

[1] DGEBPA type resin
[2] a carboxylated nitrile rubber of B. F. Goodrich
[3] a series of amidoamines of Pacific Anchor Chemical
[4] a polyamide of Henkel Chemical
[5] a polythioether rubber of P. R. C. Co.
[6] a series of urethane rubbers of Uniroyal
[7] an epoxy cresol novalac type resin
[8] an aliphatic amine

Table II

| Results of Tensile Shear Strength Determinations | | | |
|---|---|---|---|
| Sample No. | Tensile Shear Strength (psi) | | |
| | Initial | Cured, Amb T. | Cured, 200°F |
| 1 | 20 | 1400 | 300 |
| 2 | 30 | 1800 | 600 |
| 3 | 15 | 400 | 100 |
| 4 | 0 | 2100 | 600 |
| 5 | 15 | 300 | 100 |
| 6 | 55 | 400 | 150 |
| 7 | 30 | 600 | 100 |
| 8 | 2 | 800 | 150 |
| 9 | 0 | 200 | 150 |
| 10 | 20 | 1500 | 200 |
| 11 | 30 | 1000 | 150 |
| 12 | 15 | 800 | 200 |

It can be see that, by varying the components, a wide array of bond tensile shear strengths can be achieved. Further, it can be see that when epoxy resins of molecular weights below 400 are used (samples 4 and 9), no green bond is formed and when the molecular weight is 450 psi, while a green bond forms, the green bond strength is quite weak.

Example 2 - Bond Flexibility

To assess the flexibility of the bonds formed by the adhesives of this invention, two determinations were made. In the first, bonded steel composites formed and cured at ambient temperature as in Example 1, were examined for peel strength at ambient temperature following ASTM procedure D-1781. In it, the composite is subjected to a force perpendicular to the bonded surface, and the force required to achieve bond failure (in pounds per linear inch) is recorded. Generally a peel value of 15 or greater is indicative of a flexible bond.

In the second determination, the elongation properties of the adhesive films were examined in accordance with ASTM procedure D-412. Briefly, the adhesives were cured on a teflon-coated surface, and the cured film is removed. This film is then subjected to a linear stretch until a tear occurs; the % increase in length observed prior to the tear is recorded.

These determinations were performed on Samples 1-5, the results are presented in Table III.

Table III

| Results of Flexibility Tests | | |
|---|---|---|
| Sample No. | Peel (PLI) | Elongation (%) |
| 1 | 32 | 30 |
| 2 | 15 | 30 |
| 3 | 45 | 70 |
| 4 | 12 | 5 |
| 5 | 30 | 100 |

It can be seen that all samples, except 4 (which employed the low molecular weight epoxy resin) give desirable peel values and high elongation. Thus, the cured bonds are quite flexible.

It is apparent that many modifications and variations of this invention as hereinabove set forth may be made without departing from the spirit and scope thereof. The specific embodiments described are given by way of example only, and the invention is limited only by the terms of the appended claims.

## Claims

1. A self-fixturing structural bonding adhesive which cures at ambient temperature comprising:

(a) about 80 to about 95% (by weight) of a thermoplastic epoxy which is produced by reacting about 10 to about 60% (by weight) of an epoxy resin selected from the group consisting of diglycidyl ethers of bisphenol A and epoxy cresol novalaks, wherein said resin has a molecular weight of 450-1400, and about 40 to about 90% (by weight) of an elastomer selected from the group consisting of carboxy-nitrile rubbers, thioether rubbers, and urethane rubbers containing isocyanate substituents at a temperature above the melting or softening point of the elastomer; and

(b) about 5 to about 20% (by weight) of a liquid curing agent containing one or more amine, amide, or imidazole functionalities.

2. The adhesive of Claim 1 wherein the liquid curing agent is selected from the group consisting of amido amines, polyamides, imidazole derivatives, aliphatic amines, aromatic amines, and mannich bases.

3. The adhesive of Claim 1 which further comprises one or more reinforcing agents selected from the group consisting of talc, carbon black, silica, limestone, and metal powder.

4. A process for forming an adhesive bond between two substrate surfaces comprising:

(a) applying to at least one of the substrate surfaces to be bonded, self-fixturing structural bonding adhesive which comprises

(i) about 80 to about 95% (by weight) of thermoplastic epoxy which is produced by reacting about 10 to about 60% (by weight) of an epoxy resin selected from the group consisting of diglycidyl ethers of bisphenol A and epoxy cresol novalaks, wherein said resin has a molecular weight of 450-1400, and about 40 to about 90% (by weight) of an elastomer selected from the group consisting of carboxy-nitrile rubbers, thioether rubbers, and urethane rubbers containing diisocyanate substituents at a temperature above the melting or softening point of the elastomer; and

(ii) about 5 to about 20% (by weight) of liquid curing agent containing one or more amine, amide, or imidazole functionalities;

(b) bringing the two substrate surfaces into contact with each other such that an initial holding bond is formed; and

(c) incubating the joined surfaces at ambient temperature for a sufficient time to permit the adhesive to cure.

5. The process of Claim 4 wherein the liquid curing agents are selected from the group consisting of amido amines, polyamides, imidazole derivatives, aliphatic amines, aromatic amines, and mannich bases.

6. The process of Claim 4 wherein the adhesive further comprises one or more reinforcing agents selected from the group consisting of talc, carbon black, silica, limestone, and metal powder.

7. The process of Claim 4 wherein the liquid curing agent and the thermoplastic admixture are mixed by continuously feeding both components through metered valves into a mixing chamber immediately prior to applying the adhesive to the substrate.

8. A bonded substrate composite produced by the process of Claim 4.

Claims for the following Contracting State: ES

1. A process for forming an adhesive bond between two substrate surfaces comprising:

(a) applying to at least one of the substrate surfaces to be bonded, self-fixturing structural bonding adhesive which comprises

(i) about 80 to about 95% (by weight) of thermoplastic epoxy which is produced by reacting about 10 to about 60% (by weight) of an epoxy resin selected from the group consisting of diglycidyl ethers of bisphenol A and epoxy cresol novalaks, wherein said resin has a molecular weight of 450-1400, and about 40 to about 90% (by weight) of an elastomer selected from the group consisting of carboxy-nitrile rubbers, thioether rubbers, and urethane rubbers containing diisocyanate substituents at a temperature above the melting or softening point of the elastomer; and (ii) about 5 to about 20% (by weight) of liquid curing agent containing one or more amine, amide, or imidazole functionalities;

(b) bringing the two substrate surfaces into contact with each other such that an initial holding bond is formed; and

(c) incubating the joined surfaces at ambient temperature for a sufficient time to permit the adhesive to cure.

2. The process of Claim 1 wherein the liquid curing agents are selected from the group consisting of amido amines, polyamides, imidazole derivatives, aliphatic amines, aromatic amines, and mannich bases.

3. The process of Claim 1 wherein the adhesive further comprises one or more reinforcing agents selected from the group consisting of talc, carbon black, silica, limestone, and metal powder.

4. The process of Claim 1 wherein the liquid curing agent and the thermoplastic admixture are mixed by continuously feeding both components through metered valves into a mixing chamber immediately prior to applying the adhesive to the substrate.

5. A bonded substrate composite produced by the process of Claim 1.